# EUROPÄISCHE PATENTSCHRIFT

(11) **EP 2 861 447 B1**
(45) Veröffentlichungstag und Bekanntmachung des Hinweises auf die Patenterteilung: **03.08.2016**
(21) Anmeldenummer: 13719093.0
(22) Anmeldetag: 26.04.2013
(51) Int. Cl.: B60K 26/02, B60W 50/16, G05G 5/03

(54) **VERFAHREN UND STEUERGERÄT ZUM STEUERN EINES HAPTISCHEN FAHRPEDALS EINES KRAFTFAHRZEUGS MIT PRIORISIERUNG VON AKTIVIERUNGSSIGNALEN, SOWIE COMPUTERPROGRAMMPRODUKT ZUR DURCHFÜHRUNG DES VERFAHRENS UND COMPUTERLESBARES MEDIUM AUF DEM DIESES GESPEICHERT IST**
METHOD AND CONTROL UNIT FOR CONTROLLING A HAPTIC ACCELERATOR PEDAL FOR A VEHICLE WITH PRIORITY CONTROL OF ACTIVATING SIGNALS, AS WELL AS COMPUTER PROGRAM PRODUCT FOR EXECUTING THE METHOD AND COMPUTER READABLE MEDIUM ON WHICH IT IS STORED
PROCÉDÉ ET APPAREIL DE COMMANDE POUR COMMANDER UN PÉDALE ACCÉLÉRATEUR HAPTIQUE POUR UN VÉHICULE AVEC PRIORISATION DES SIGNAUX D'ACTIVATION, AINSI QUE PRODUIT DE PROGRAMME POUR ORDINATEUR POUR EXÉCUTER LE PROCÉDÉ ET MÉDIUM LISIBLE PAR ORDINATEUR AVEC UN TEL PRODUIT DE PROGRAMME

(30) Priorität: 18.06.2012 DE 102012210245
(43) Veröffentlichungstag der Anmeldung: 22.04.2015
(73) Patentinhaber: Robert Bosch GmbH, 70442 Stuttgart (DE)
(72) Erfinder: BALKEMA, Jan Wietse, 31139 Hildesheim (DE); SIEBER, Udo, 74321 Bietigheim (DE); DEISSLER, Markus, 74172 Neckarsulm (DE); HENNING, Daniel, 74372 Sersheim (DE); POECHMUELLER, Werner, 31139 Hildesheim (DE)
(86) Internationale Anmeldenummer: PCT/EP2013/058714
(87) Internationale Veröffentlichungsnummer: WO 2013/189648

(56) Entgegenhaltungen:
- EP-A1- 1 493 606
- EP-A1- 1 533 170
- EP-A1- 2 261 071
- DE-A1- 10 025 492
- DE-A1-102010 062 373

## Beschreibung

### Gebiet der Erfindung

Die vorliegende Erfindung betrifft ein Verfahren sowie ein Steuergerät zum Steuern eines haptischen Fahrpedals in einem Kraftfahrzeug. Die Erfindung betrifft ferner ein Computerprogrammprodukt, das beim Ausführen auf einem programmierbaren Steuergerät das erfindungsgemäße Verfahren ausführen soll, sowie ein computerlesbares Medium, auf dem ein solches Computerprogrammprodukt gespeichert ist.

### Stand der Technik

EP 1 493 606 beschreibt ein Verfahren zum Steuern eines haptischen Fahrpedals in einem Kraftfahrzeug, wobei das haptische Fahrpedal dazu ausgelegt ist, mittels eines Aktuators durch Ausüben einer Gegenkraft entgegen einer Betätigungsrichtung haptisch wahrnehmbare Signale an einem Pedalhebel zu erzeugen, wobei
das haptische Fahrpedal dazu ausgelegt ist, eine Mehrzahl unterschiedlicher haptisch wahrnehmbarer Signale zu erzeugen, wobei eine Erzeugung eines haptisch wahrnehmbaren Signals durch den Empfang eines zugehörigen Aktivierungssignal von einer Fahrzeugeinrichtung ausgelöst werden kann, wobei das Verfahren die folgenden Schritte aufweist:
Empfangen eines Aktivierungssignals, welches angibt, dass aktuell ein haptisch wahrnehmbares Signal erzeugt werden soll;
Zuordnen eines dem empfangenen Aktivierungssignal zugehörigen Priorisierungsgrades;
Ansteuern des Aktuators zur Erzeugung des haptisch wahrnehmbaren Signals unter Berücksichtigung des zugeordneten Priorisierungsgrades.

In modernen Kraftfahrzeugen wird der Fahrer durch eine Vielzahl von zur Verfügung gestellten Informationen beim Führen des Fahrzeugs unterstützt. Beispielsweise kann es hilfreich sein, dem Fahrer Rückmeldungen über bestimmte Fahrzustände oder Aufforderungen an den Fahrer, bestimmte Maßnahmen zu treffen, zu signalisieren, um die Sicherheit beim Fahren oder den Komfort des Fahrers erhöhen zu können oder um Treibstoff einsparen zu können. Diese Rückmeldungen können auf verschiedene Weise wie zum Beispiel optisch oder akustisch bereitgestellt werden.

In modernen Kraftfahrzeugen werden zukünftig zusätzlich oft auch Möglichkeiten einer haptischen Rückmeldung an den Fahrer über das Fahrpedal des Fahrzeugs implementiert werden. Das Fahrpedal ist hierzu mit einem Aktuator ausgestattet, der es ermöglicht, einen von dem Fahrer zu betätigenden Pedalhebel des Fahrpedals gezielt mit einer Kraft zu beaufschlagen.

Beispielsweise kann der Aktuator ab einer bestimmten Pedalhebellage einem weiteren Niederdrücken des Pedalhebels gezielt entgegenwirken und so einen Pedaldruckpunkt zu simulieren, um einem Fahrer so beispielsweise zu signalisieren, dass ein stärkeres Niederdrücken des Pedalhebels zu einer überproportionalen Erhöhung des Kraftstoffverbrauchs führen würde.

Alternativ kann mit Hilfe des Aktuators beispielsweise eine zeitlich variierende Kraft auf den Pedalhebel ausgeübt werden, um diesen in Schwingungen zu versetzen, beispielsweise in Form von Vibrationen oder Pulsationen. Durch unterschiedliche Arten des Vibrierens oder Pulsierens können dem Fahrer verschiedene Warnhinweise oder Informationen signalisiert werden. Beispielsweise kann der Fahrer auf eine Gefahrensituation hingewiesen werden, wenn z.B. ein fahrzeuginternes Radarsystem erkennt, dass ein vorausfahrendes Fahrzeug oder ein Hindernis derart nahe kommt, dass das Fahrzeug gebremst werden sollte. Alternativ kann ein Fahrer durch Analyse von Kartendaten und aktuellen Standortdaten darauf hingewiesen werden, dass die aktuelle Fahrzeuggeschwindigkeit für eine vorausliegende Kurve zu hoch ist oder demnächst eine Ortseinfahrt bevorsteht und das Fahrzeug gebremst oder ausrollen gelassen werden sollte, um Gefahren zu vermeiden oder Kraftstoff zu sparen.

Auf diese Weise können dem Fahrer durch dessen haptische Wahrnehmung Hinweise und Warnungen mitgeteilt oder auch Komfortfunktionen bereitgestellt werden, ohne dass dieser durch optische oder akustische Signale beispielsweise vom Beobachten des Verkehrs abgelenkt würde.

DE 25 55 429 beschreibt ein System zur Erzeugung von taktilen bzw. haptisch wahrnehmbaren Signalen in einem Fahrzeug.

### Offenbarung der Erfindung

Die vorliegende Erfindung ermöglicht in ihren Ausführungsformen ein vorteilhaftes Ansteuern eines haptischen Fahrpedals in einem Kraftfahrzeug. Insbesondere kann die Erfindung ein Aktivieren des Aktuators des Fahrpedals derart Steuern, das z.B. Einflüsse des Aktuators auf das Fahrpedal, die von einem Fahrer als störend oder irritierend wahrgenommen werden können, vermieden oder gering gehalten werden können.

Diese Aufgabe ist durch die Merkmale der Ansprüche 1 oder 4 oder 7 oder 8 gelöst.

Gemäß Erfindung wird ein Verfahren zum Steuern eines haptischen Fahrpedals in Anspruch 1 beschrieben.

Gemäß Erfindung wird ein Steuergerät zum Steuern eines haptischen Fahrpdals in Anspruch 4 beschrieben. Das Steuergerät kann dabei eine Priorisierungseinrichtung aufweisen, welche folgende Komponenten umfasst: eine oder mehrere Schnittstellen, um verschiedene Aktivierungssignale zu empfangen; einen Speicher, um eine vorbestimmte Tabelle und/oder einen vorbestimmten Algorithmus zu speichern, durch die jedem möglichen Aktivierungssignal ein Priorisierungsgrad zugeordnet ist; und
eine Zuordnungseinheit, um einem empfangenen Aktivierungssignal eine zugehörigen Priorisierungsgrad zuzuordnen.

Ideen beziehungsweise Motivationen zu dem erfindungsgemäßen Verfahren können unter anderem darin gesehen werden, dass erkannt wurde, dass bei zukünftigen haptischen Fahrpedalen mehrere verschiedene haptisch wahrnehmbare Signale oder Rückmeldungen an den Fahrer von verschiedenen Einheiten im Fahrzeug angefordert werden können und es somit vorkommen kann, dass gleichzeitig oder zeitnah Anforderungen von verschiedenen Fahrzeugeinheiten an das Fahrpedal gestellt werden, mit dem Ziel, aktuell ein haptisch wahrnehmbares Signal an den Fahrer weiterzugeben.

Um zu vermeiden, dass mehrere von verschiedenen Fahrzeugeinrichtungen ausgehende Aktivierungssignale bei dem Fahrpedal zu einer zeitlichen Überlagerung von zu erzeugenden haptisch wahrnehmbaren Signalen führen, wird vorgeschlagen, in einem Steuergerät eine Priorisierungseinrichtung vorzusehen, welche jedem empfangenen Aktivierungssignal automatisch einen zugehörigen Priorisierungsgrad zuordnet, anhand dessen anschließend entschieden werden kann, ob aufgrund des Aktivierungssignales tatsächlich der Aktuator zur Erzeugung des haptischen wahrnehmbaren Signals angesteuert wird oder nicht.

Gemäß Erfindung ist vogesehen, den Aktuator ausschließlich dann zur Erzeugung eines haptisch wahrnehmbaren Signals anzusteuern, wenn der dem empfangenen Aktivierungssignal zugehörige Priorisierungsgrad höher ist als ein Priorisierungsgrad eines anderen zuvor oder gleichzeitig empfangenen Aktivierungssignals oder wenn seit dem Empfangen eines vorherigen Aktivierungssignals mindestens eine vorgegebene Signal-Zeitdauer vergangen ist.

Mit anderen Worten kann ein das Verfahren ausführendes Steuergerät jedes Mal, wenn von einer Fahrzeugeinrichtung ein Aktivierungssignal empfangen wird und daraufhin von der Priorisierungseinrichtung ein dem Aktivierungssignal zugehöriger Priorisierungsgrad zugeordnet wurde, entscheiden, ob der zugeordnete Priorisierungsgrad höher ist als derjenige eines gleichzeitig oder kurz zuvor empfangenen Aktivierungssignals. Falls dies der Fall ist, wird entschieden, dass, bei gleichzeitigem bzw. zeitnahem Empfang zweier Aktivierungssignale, das Aktivierungssignal mit dem höheren Priorisierungsgrad zur Erzeugung des entsprechenden zugehörigen haptisch wahrnehmbaren Signals führt, wohingegen das Aktivierungssignal mit dem niedrigeren Priorisierungsgrad ignoriert wird. Falls kurz zuvor bereits ein Aktivierungssignal eine Erzeugung eines haptisch wahrnehmbaren Signals ausgelöst hat, kann bei Empfang eines höher priorisierten Aktivierungssignals die Erzeugung des aufgrund des vorherigen Aktivierungssignals ausgelösten haptisch wahrnehmbaren Signals abgebrochen werden und stattdessen das dem höher priorisierten Aktivierungssignal zugehörige haptische Signal erzeugt werden.

Um diese Aufgabe erfüllen zu können, sollte das Steuergerät das zuvor empfangene Aktivierungssignal beziehungsweise dessen Priorisierungsgrad zumindest so lange speichern, bis ein weiteres Aktivierungssignal empfangen wird oder bis die Erzeugung des zugehörigen haptisch wahrnehmbaren Signals abgeschlossen ist. Außerdem kann gespeichert werden, wann das vorherige Aktivierungssignal empfangen wurde, so dass bei Empfang eines weiteren Aktivierungssignals entschieden werden kann, ob seit dem Empfangen des vorherigen Aktivierungssignals zumindest eine vorgegebene Signal-Zeitdauer vergangen ist, wobei diese Signal-Zeitdauer einer Zeitdauer entsprechen kann, während der das betreffende haptisch wahrnehmbare Signal erzeugt werden soll. Das Steuergerät kann somit feststellen, ob seit dem Empfangen des vorherigen Aktivierungssignals die dadurch ausgelöste Erzeugung eines zugehörigen haptisch wahrnehmbaren Signals bereits abgeschlossen ist und kann, wenn dies der Fall ist, entscheiden, dass aufgrund des aktuellen Aktivierungssignals die Erzeugung eines haptisch wahrnehmbaren Signals ausgelöst werden soll, selbst wenn dessen Priorisierungsgrad niedriger ist als derjenige des vorherigen, bereits erledigten Aktivierungssignals. Die vorgegebene Signal-Zeitdauer kann dabei beispielsweise im Bereich von 0,1 bis 5 Sekunden liegen.

Ein Vorteil des vorgeschlagenen Ansteuerungsverfahrens für das haptische Fahrpedal kann in einer Gewichtung und Entscheidung gesehen werden, welche angibt, dass eine von einer der Fahrzeugeinrichtungen übermittelte Anforderung einer Erzeugung eines haptisch wahrnehmbaren Signals in einer jeweiligen Fahrsituation im Vergleich zu anderen Anforderungen wichtiger ist und somit priorisiert werden sollte. Würde dies nicht erfolgen, so würden die Rückmelde-Anforderungen an das Fahrpedal im einfachsten Fall einfach der Reihe nach ausgeführt. Es ist jedoch von Bedeutung, hier eine Gewichtung und priorisierende Entscheidung zu treffen, welche der aktuell vorliegenden Anforderungen wichtiger ist und somit zur Erzeugung eines haptisch wahrnehmbaren Signals weitergegeben werden sollte und welche der Anforderungen unterdrückt und nicht ausgeführt werden sollte. Beispielsweise können sicherheitsrelevante Anforderungen wie zum Beispiel eine Kurvenwarnung höher zu bewerten und zu priorisieren sein als zum Beispiel eine Anforderung zur Kraftstoffverbrauchsminderung des Fahrzeugs.

Gemäß einer weiteren Ausführungsform und des erfindungsgemäßen Verfahrens kann vorgesehen sein, dass Fahrzeugeinrichtungen, welche die Erzeugung eines haptisch wahrnehmbaren Signals anfordern können, dem hierfür zuständigen Steuergerät eine zeitlich vorgelagerte "Vorwarnung" in Form eines Vor-Aktivierungssignals geben können, um anzugeben, dass in naher Zukunft von dieser Fahrzeugeinrichtung mit hoher Wahrscheinlichkeit eine Anforderung einer Erzeugung eines haptisch wahrnehmbaren Signals zu erwarten ist. Das von dem Steuergerät ausgeführte Verfahren kann dabei dahingehend modifiziert werden, dass beim Empfangen eines solchen Vor-Aktivierungssignals, welches angibt, dass zukünftig wahrscheinlich ein haptisch wahrnehmbares Signal erzeugt werden soll, auch diesem empfangenen Vor-Aktivierungssignal ein zugehöriger Priorisierungsgrad zugeordnet wird. Wenn zeitgleich oder kurze Zeit später ein Aktivierungssignal empfangen wird, wird der Priorisierungsgrad dieses Aktivierungssignals mit dem Priorisierungsgrad des Vor-Aktivierungssignals verglichen und der Aktuator des Fahrpedals ausschließlich zur Erzeugung des haptisch wahrnehmbaren Signals angesteuert, wenn der dem empfangenen Aktivierungssignal zugehörige Priorisierungsgrad höher ist als der Priorisierungsgrad des zuvor empfangenen Vor-Aktivierungssignals oder wenn seit dem Empfangen des Vor-Aktivierungssignals mindestens eine vorgegebene Vor-Aktivierungs-Zeitdauer vergangen ist.

Mithilfe derartiger Vor-Aktivierungssignale und deren Berücksichtigung bei der Entscheidung, ob aufgrund eines empfangenen aktuellen Aktivierungssignals tatsächlich ein haptisch wahrnehmbares Signal erzeugt werden soll, kann somit entschieden werden, welches aktuell oder voraussichtlich in naher Zukunft empfangene Aktivierungssignal den höchsten Priorisierungsgrad haben wird und somit eine priorisierte Erzeugung eines haptisch wahrnehmbaren Signals rechtfertigt. Dies kann insbesondere dann vorteilhaft oder gar notwendig sein, wenn zum Beispiel ein haptisch wahrnehmbares Signal mit niedriger Priorisierung nicht mehr unterbrochen werden kann und während dessen Erzeugung ein prioritätshöheres Aktivierungssignal beispielsweise von einer anderen Fahrzeugeinrichtung empfangen wird.

Zusammenfassend kann, wenn von einer der Fahrzeugeinrichtungen ein Aktivierungssignal empfangen wird, zunächst der zugehörige Priorisierungsgrad zugeordnet werden und dann analysiert werden, ob zeitgleich oder innerhalb einer vorangehenden Signal-Zeitdauer ein Aktivierungssignal mit höherem Priorisierungsgrad empfangen wurde. Ergänzend kann überprüft werden, ob innerhalb einer vorangegangenen Vor-Aktivierungs-Zeitdauer ein Vor-Aktivierungssignal mit höherem Priorisierungsgrad empfangen wurde, wobei die Vor-Aktivierungs-Zeitdauer länger sein kann als die Signal-Zeitdauer und beispielsweise derjenigen Zeitdauer entsprechen kann, die benötigt wird, um bei Erkennen einer bestimmten Fahrsituation, beispielsweise einer Gefahrensituation, zu analysieren, ob tatsächlich ein haptisch wahrnehmbares Signal an den Fahrzeugfahrer weitergegeben werden soll. Typische Vor-Aktivierungs-Zeitdauern können dabei beispielsweise im Bereich von 0,1 bis 2 Sekunden liegen. Wenn beide vorgenannten Bedingungen nicht zutreffen, kann aufgrund des aktuell empfangenen Aktivierungssignals ein entsprechendes haptisch wahrnehmbares Signal an dem Fahrpedal erzeugt werden.

Um die Priorisierungsgrade einfach zuordnen zu können, können die möglichen zu empfangenden Aktivierungssignale und deren zugehörige Priorisierungsgrade in einer vorbestimmten Tabelle gespeichert werden und/oder durch einen vorgegebenen Algorithmus ermittelt werden, bei der jedem möglichen Aktivierungssignal ein Priorisierungsgrad eindeutig zugeordnet ist. Zusätzlich kann durch diese Tabelle und/oder durch einen Algorithmus gegebenenfalls auch zu jedem möglichen Vor-Aktivierungssignal ein zugehöriger Priorisierungsgrad gespeichert bzw. zugeordnet sein. Außerdem können zu jedem Aktivierungssignal eine zugehörige Signal-Zeitdauer und zu jedem Vor-Aktivierungssignal eine zugehörige Vor-Aktivierungs-Zeitdauer abgespeichert sein. Solche Tabellen, Algorithmen oder Listen können beispielsweise vom Fahrzeughersteller oder einem Zulieferer erstellt werden und die Wichtigkeit der Erzeugung einzelner haptisch wahrnehmbarer Signale berücksichtigen. Beispielsweise können Aktivierungssignale, aufgrund derer ein haptisch wahrnehmbares Signal zur Erhöhung der Fahrsicherheit des Fahrzeugs erzeugt werden soll, einen höheren Priorisierungsgrad erhalten als Aktivierungssignale, die lediglich zur Erzeugung von haptisch wahrnehmbaren Signalen zur Erhöhung des Fahrkomforts vorgesehen sind.

Die oben beschriebenen Ausführungsformen von erfindungsgemäßen Verfahren und die damit erreichbaren Funktionalitäten und Vorteile können durch ein in einem Fahrzeug vorgesehenes Steuergerät zum Steuern des Fahrpedals implementiert werden. Das Steuergerät kann dabei beispielsweise in einem Motorsteuergerät, einem Fahrzeugleitrechner oder Bordelektronik eines haptischen Fahrpedals integriert sein.

Das Steuergerät kann dazu ausgelegt sein, über geeignete Schnittstellen beispielsweise Aktivierungssignale von verschiedenen Fahrzeugeinrichtungen sowie Signale von einem Pedalhebellagesensor zu empfangen und Steuersignale an den Aktuator des Fahrpedals zu senden. Der allgemein verwendete Begriff "Steuergeräts" soll dabei nicht ausschließen, dass nicht nur ein Steuern, sondern auch ein aktives Regeln des Aktuators durchgeführt werden kann.

Das Steuergerät kann das vorgeschlagene Steuer- bzw. Priorisierungsverfahren sowie etwaige Informationsauswertungen von Aktivierungssignalen und/oder Sensorsignalen in Hardware und/oder in Software implementieren. Es kann vorteilhaft sein, ein programmierbares Steuergerät für die Ausführung des oben beschriebenen Verfahrens zu programmieren. Hierzu kann ein Computerprogrammprodukt computerlesbare Anweisungen aufweisen, die das programmierbare Steuergerät dazu anweisen, die Schritte des jeweiligen Verfahrens durchzuführen. Das Computerprogrammprodukt kann auf einem computerlesbaren Medium wie beispielsweise einer CD, einer DVD, einem Flashspeicher, einem ROM, einem EPROM oder ähnlichem gespeichert sein. Um die von dem Aktuator einzunehmende Anordnung korrekt ansteuern zu können, kann neben der Verarbeitung weiterer Sensordaten auch in einer Datenbank oder in Form von Kennlinien gespeicherte Information über ein von dem Aktuator durchgeführtes Reaktionsverhalten auf bestimmte Steuerungssignale oder ein Streckenverhalten des Aktuators herangezogen werden.

Es wird angemerkt, dass mögliche Merkmale und Vorteile von Ausführungsformen der Erfindung hierin teilweise mit Bezug auf ein erfindungsgemäßes Verfahren und teilweise mit Bezug auf ein erfindungsgemäßes Steuergerät beschrieben sind. Ein Fachmann wird erkennen, dass die einzelnen Merkmale in geeigneter Weise miteinander kombiniert oder ausgetauscht werden können, insbesondere von dem Steuergerät auf das Verfahren und umgekehrt übertragen werden können, um auf diese Weise zu weiteren Ausführungsformen und möglicherweise Synergieeffekten gelangen zu können.

### Kurze Beschreibung der Zeichnungen

Nachfolgend werden Ausführungsformen der Erfindung mit Bezug auf die beigefügten Zeichnungen beschrieben. Weder die Beschreibung noch die Zeichnungen sollen dabei als die Erfindung einschränkend ausgelegt werden.
Figur 1 zeigt ein Kraftfahrzeug mit einem haptischen Fahrpedal und einem Steuergerät zum Ausführen eines Verfahrens gemäß einer Ausführungsform der vorliegenden Erfindung.
Figur 2 zeigt ein haptisches Fahrpedal mit einem Steuergerät gemäß einer Ausführungsform der vorliegenden Erfindung.

Die Figuren sind lediglich schematisch und nicht maßstabsgetreu.

### Ausführungsformen der Erfindung

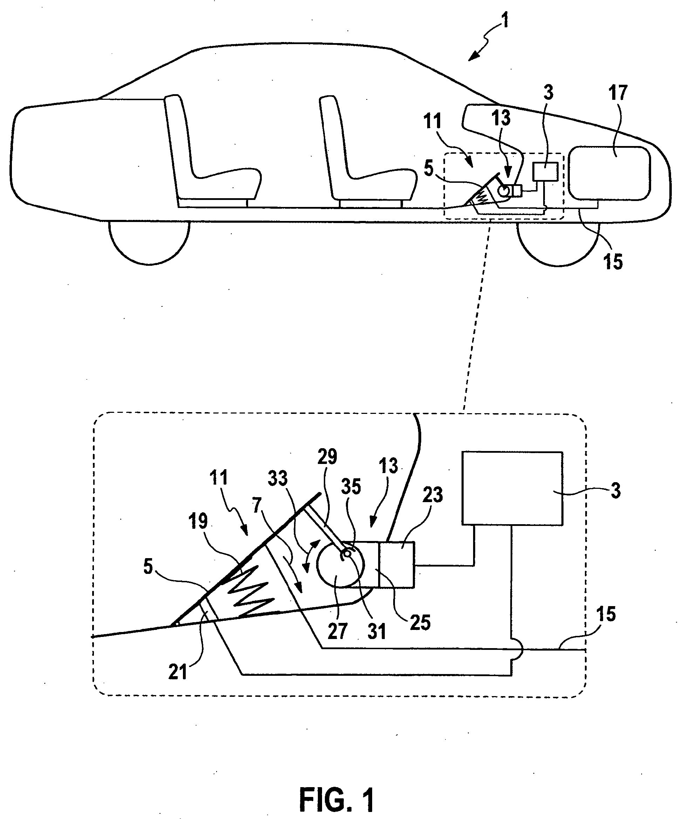

Figur 1 zeigt eine Schnittansicht eines Fahrzeugs 1 mit einem haptischen Fahrpedal 11. Durch Niederdrücken des Pedalhebels 5 kann ein Fahrer einen Motor 17 des Fahrzeugs 1 über einen Seilzug 15 oder eine mit einem Motorsteuergerät verbundene Leitung (nicht dargestellt) zum Beschleunigen des Fahrzeugs veranlassen. Der Fahrer muss hierzu den Pedalhebel 5 in einer Betätigungsrichtung des Pfeils 7 niederdrücken, wodurch sich der Pedalhebel 5, ausgehend von einer Ruheposition entlang eines Verlagerungsbereichs hin zu einer maximal betätigten Position, verlagern lässt. Ein Pedalhebellagesensor 21 kann dabei die aktuelle Position bzw. Lage des Pedalhebels 5 bestimmen. Eine Feder 19 spannt den Pedalhebel 5 entgegen der Betätigungsrichtung 7 hin zu der Ruheposition vor.

Das Fahrpedal 11 ist als haptisches Fahrpedal ausgestaltet. Hierzu verfügt das Fahrpedal 11 über einen Aktuator 13, mit Hilfe dessen der Pedalhebel 5 in eine gewünschte Richtung entgegen der Betätigungsrichtung 7 bewegt bzw. in diese mit Kraft beaufschlagt werden kann. Der Aktuator 13 kann hierbei den Pedalhebel 5 zu Schwingungen anregen, beispielsweise in Form von Vibrationen oder Pulsationen. Alternativ kann der Aktuator 13 eine Kraft auf den Pedalhebel 5 ausüben, die ein weiteres Niederdrücken des Pedalhebels 5 erschweren kann und somit von einem Fahrer als Druckpunkt beim Betätigen des Pedalhebels 5 wahrgenommen werden kann.

Der Aktuator 13 kann mit einem Motor 23 betrieben werden, der über ein Getriebe 25 mit einer Betätigungsscheibe 27 gekoppelt ist. Durch Betätigen des Motors 23 kann die Betätigungsscheibe 27, wie durch den Pfeil 33 angedeutet, im oder gegen den Uhrzeigersinn verdreht werden. An der Betätigungsscheibe 27 ist in einem außerzentrischen Bereich ein Nocken 31 vorgesehen. Dieser Nocken 31 kann mit einem an dem Pedalhebel 5 vorgesehenen Stößel 29 zusammenwirken. Hierzu weist der Stößel 29 an seinem zu dem Aktuator 13 gerichteten Ende eine gabelförmige Aufnahme 35 auf, in die der Nocken 31 eingreifen kann, sobald die Betätigungsscheibe 27 in eine entsprechende Position gedreht wurde.

Alternativ kann der Aktuator auch als Direktantrieb beispielsweise mit einem Torquer-Motor ausgestaltet sein, wodurch hohe Kräfte auch ohne ein Getriebe erzeugt werden können.

Der Aktuator 13 wird von einem Steuergerät 3 angesteuert. Das Steuergerät 3 erkennt, wenn einem Fahrer über den Pedalhebel 5 ein haptisch wahrnehmbares Signal übermittelt werden soll, um ihn beispielsweise auf die Möglichkeit einer kraftstoffsparenden Fahrweise oder eine Gefahrensituation hinzuweisen. Das Steuergerät aktiviert daraufhin den Aktuator und steuert diesen derart an, dass eine konstante oder zeitlich variierende Kraft entgegen der Betätigungsrichtung 7 auf den Pedalhebel 5 ausgeübt wird.

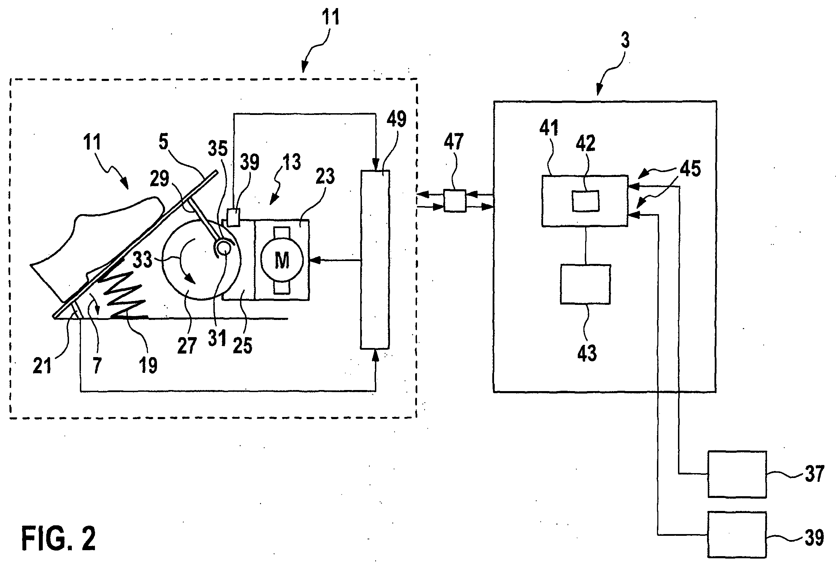

Fig. 2 veranschaulicht eine Ausführungsform eines Fahrpedals 11 und des zu desser Ansteuerung verwendeten Steuergeräts 3, um das Fahrpedal 11 im Einklang mit dem erfindungsgemäßen Verfahren anzusteuern.

Das Steuergerät 3, das zum Beispiel Teil eines elektronischen Motorsteuergeräts (ECU, electronic control unit) sein kann, ist mit mehreren Fahrzeugeinrichtungen 37, 39 verbunden. Jede dieser Fahrzeugeinrichtungen 37, 39 ist dazu ausgelegt, bestimmte Sensoren oder Funktionen des Fahrzeugs zu überwachen und bei Vorliegen einer Aktivierungsbedingung ein Aktivierungssignal an das Steuergerät 3 zu schicken, mit dem ausgedrückt werden soll, dass die jeweilige Fahrzeugeinrichtung 37, 39 eine Erzeugung eines haptisch wahrnehmbaren Signals an dem Fahrpedal 11 anfordern möchte.

Eine beispielhafte Fahrzeugeinrichtung 37 kann ein Radar langer Reichweite (LRR, long range radar) sein, welches kontinuierlich den Abstand des Fahrzeugs zu beispielsweise vorausfahrenden Fahrzeugen oder möglichen Hindernissen überwacht. Das LRR kann dabei die Erzeugung eines haptisch wahrnehmbaren Warnsignals anfordern, wenn beispielsweise der Abstand zu einem vorausfahrenden Fahrzeug kritisch klein zu werden droht und deshalb der Fahrer aufgefordert werden soll, die Geschwindigkeit des Fahrzeuges zu reduzieren.

Eine weitere beispielhafte Fahrzeugeinrichtung 39 kann von einem Navigationssystem des Fahrzeugs gebildet werden. Hierbei können zum Beispiel haptisch wahrnehmbare Warnsignale angefordert werden, wenn die aktuelle Geschwindigkeit des Fahrzeugs für eine von dem Navigationssystem erkannte voraus liegende Kurve zu hoch ist. Das Navigationssystem kann auch die Erzeugung eines haptisch wahrnehmbaren Hinweissignals anfordern, wenn zum Beispiel aufgrund von Kartendaten erkannt wird, dass voraus liegend eine Ortseinfahrt von dem Fahrzeug angefahren wird und deshalb bereits frühzeitig der Fahrer aufgefordert werden kann, das Fahrzeug ausrollen zu lassen, um auf diese Weise Kraftstoff sparen zu können.

Die von den Fahrzeugeinrichtungen 37, 39 übermittelten Aktivierungssignale können in dem Steuergerät 3 über Schnittstellen 45 an eine Priorisierungseinrichtung 41 geleitet werden. Die Priorisierungseinrichtung 41 ist mit einem Speicher 43 verbunden. In diesem Speicher 43 ist eine Tabelle und/oder ein Algorithmus gespeichert, durch die jedem der möglicherweise zu empfangenden Aktivierungssignale ein Priorisierungsgrad zugeordnet ist. Wenn eine in der Priorisierungseinrichtung 41 enthaltenen Zuordnungseinheit 42 einem aktuell empfangenen Aktivierungssignal den zugehörigen Priorisierungsgrad zugeordnet hat, kann die Priorisierungseinrichtung anhand dieses Priorisierungsgrades mithilfe des oben beschriebenen Verfahrens entscheiden, ob ein von den Fahrzeugeinrichtungen 37, 39 übermitteltes Aktivierungssignal eine ausreichend hohe Wichtigkeit besitzt und das Steuergerät 3 somit das Fahrpedal 11 zur Erzeugung eines zugehörigen haptisch wahrnehmbaren Signals ansteuern sollte.

Falls diese Bedingung erfüllt ist, kann das Steuergerät 3 über eine geeignete Schnittstelle 47, beispielsweise einen CAN-Bus, mit dem Fahrpedal 11 kommunizieren und dessen Bordelektronik 49 instruieren, ein geeignetes haptisch wahrnehmbares Signal zu erzeugen. In der Bordelektronik (EoB, electronic on board) des Fahrpedals 11 ist dabei geeignete Hardware und/oder Software zur Ansteuerung des Aktuators 13 vorgesehen, um vordefinierte haptische Signale durch geeignete Ansteuerung des Motors 23 zu erzeugen und dabei mithilfe von Signalen zum Beispiel eines Pedalpositionssensors 21 und/oder eines Aktuatorpositionssensors 39 eine Positionskontrolle, eine Kraftkontrolle und/oder eine Diagnose des Fahrpedalzustandes durchzuführen.

Mithilfe des beschriebenen Steuergeräts und des damit ausführbaren Verfahrens kann somit eine Priorisierung eingehender Aktivierungssignale unter verschiedenen Aspekten erfolgen. Es kann zum Beispiel eine Anforderung, die sicherheitsrelevant ist, höher eingestuft werden als eine verbrauchsmindernde Anforderung oder eine Geschwindigkeitswarnung. Weiterhin kann eine zeitliche Bewertung erfolgen, um dem Fahrer nicht innerhalb sehr kurzer Zeit, zum Beispiel weniger als einer Sekunde, verschiedene haptische Rückmeldungen zu geben, die dieser dann nicht mehr zuordnen und differenzieren kann.

## Patentansprüche

1. Verfahren zum Steuern eines haptischen Fahrpedals (11) in einem Kraftfahrzeug (1), wobei das haptische Fahrpedal (11) dazu ausgelegt ist, mittels eines Aktuators (13) durch Ausüben einer Gegenkraft entgegen einer Betätigungsrichtung (7) haptisch wahrnehmbare Signale an einem Pedalhebel (5) zu erzeugen, **dadurch gekennzeichnet, dass** das haptische Fahrpedal (11) dazu ausgelegt ist, eine Mehrzahl unterschiedlicher haptisch wahrnehmbarer Signale zu erzeugen, wobei eine Erzeugung eines haptisch wahrnehmbaren Signals durch den Empfang eines zugehörigen Aktivierungssignals von einer Fahrzeugeinrichtung (37, 39) ausgelöst werden kann,
wobei das Verfahren die folgenden Schritte aufweist:
Empfangen eines Vor-Aktivierungssignals, welches angibt, dass zukünftig wahrscheinlich ein haptisch wahrnehmbares Signal erzeugt werden soll; und
Zuordnen eines dem empfangenen Vor-Aktivierungssignal zugehörigen Priorisierungsgrades;
Empfangen eines Aktivierungssignals, welches angibt, dass aktuell ein haptisch wahrnehmbares Signal erzeugt werden soll;
Zuordnen eines dem empfangenen Aktivierungssignal zugehörigen Priorisierungsgrades;
Ansteuern des Aktuators (13) zur Erzeugung des haptisch wahrnehmbaren Signals unter Berücksichtigung des zugeordneten Priorisierungsgrades,
wobei der Aktuator (13) ausschließlich zur Erzeugung des haptisch wahrnehmbaren Signals angesteuert wird, wenn der dem empfangenen Aktivierungssignal zugehörige Priorisierungsgrad höher ist als ein Priorisierungsgrad eines zuvor oder gleichzeitig empfangenen Vor-Aktivierungssignals oder wenn seit dem Empfangen des Vor-Aktivierungssignals mindestens eine vorgegebene Vor-Aktivierungs-Zeitdauer vergangen ist.

2. Verfahren nach Anspruch 1, wobei der Aktuator (13) ausschließlich zur Erzeugung des haptisch wahrnehmbaren Signals angesteuert wird, wenn der dem empfangenen Aktivierungssignal zugehörige Priorisierungsgrad höher ist als ein Priorisierungsgrad eines anderen zuvor oder gleichzeitig empfangenen Aktivierungssignals oder wenn seit dem Empfangen eines vorherigen Aktivierungssignals mindestens eine vorgegebene Signal-Zeitdauer vergangen ist.

3. Verfahren nach einem der Ansprüche 1 oder 2, wobei der dem empfangenen Aktivierungssignal zugehörige Priorisierungsgrad anhand einer vorbestimmten Tabelle und/oder einem Algorithmus zugeordnet wird, durch die bzw. den jedem möglichen Aktivierungssignal ein Priorisierungsgrad zugeordnet ist.

4. Steuergerät (3) zum Steuern eines haptischen Fahrpedals (11) in einem Kraftfahrzeug (1), wobei das Steuergerät (3) dazu ausgelegt ist, ein Verfahren gemäß einem der Ansprüche 1 bis 3 durchzuführen.

5. Steuergerät (3) nach Anspruch 4, wobei das Steuergerät (3) eine Priorisierungseinrichtung (41) aufweist, welche folgende Komponenten umfasst:
eine oder mehrere Schnittstellen (45), um verschiedene Aktivierungssignale zu empfangen,
einen Speicher (43), um eine vorbestimmten Tabelle oder einen vorgegebenen Algorithmus zu speichern, durch die bzw. den jedem möglichen Aktivierungssignal ein Priorisierungsgrad zugeordnet ist, und
eine Zuordnungseinheit (42), um einem empfangenen Aktivierungssignal einen zugehörigen Priorisierungsgrad zuzuordnen.

6. Steuergerät (3) nach einem der Ansprüche 4 und 5, wobei das Steuergerät (3) in einem Motorsteuergerät, einem Fahrzeugleitrechner oder Bordelektronik eines haptischen Fahrpedals (11) integriert ist.

7. Computerprogrammprodukt, welches computerlesbare Anweisungen aufweist, die ein programmierbares Steuergerät (3) dazu anweisen, ein Verfahren gemäß einem der Ansprüche 1 bis 3 durchzuführen.

8. Computerlesbares Medium mit einem darauf gespeicherten Computerprogrammprodukt gemäß Anspruch 7.

## Claims

1. Method for controlling a haptic accelerator pedal (11) in a motor vehicle (1), wherein the haptic accelerator pedal (11) is designed to use an actuator (13) to produce haptically perceptible signals on a pedal lever (5) by exerting an opposing force contrary to an operating direction (7), **characterized in that** the haptic accelerator pedal (11) is designed to produce a plurality of different haptically perceptible signals, wherein production of a haptically perceptible signal can be triggered by the reception of an associated activation signal from a vehicle device (37, 39),
wherein the method has the following steps:
reception of a preliminary activation signal that indicates that a haptically perceptible signal will probably need to be produced in the future; and
allocation of a prioritization level associated with the received preliminary activation signal;
reception of an activation signal that indicates that a haptically perceptible signal currently needs to be produced;
allocation of a prioritization level associated with the received activation signal;
actuation of the actuator (13) to produce the haptically perceptible signal taking account of the allocated prioritization level,
wherein the actuator (13) is actuated exclusively to produce the haptically perceptible signal if the prioritization level associated with the received activation signal is higher than a prioritization level of a preliminary activation signal received previously or at the same time or if at least one prescribed preliminary activation period has elapsed since reception of the preliminary activation signal.

2. Method according to Claim 1, wherein the actuator (13) is actuated exclusively to produce the haptically perceptible signal if the prioritization level associated with the received activation signal is higher than a prioritization level of another activation signal received previously or at the same time or if at least one prescribed signal period has elapsed since reception of an earlier activation signal.

3. Method according to either of Claims 1 and 2, wherein the prioritization level associated with the received activation signal is allocated on the basis of a predetermined table and/or an algorithm that allocates a prioritization level to every possible activation signal.

4. Controller (3) for controlling a haptic accelerator pedal (11) in a motor vehicle (1), wherein the controller (3) is designed to perform a method according to one of Claims 1 to 3.

5. Controller (3) according to Claim 4, wherein the controller (3) has a prioritization device (41) that comprises the following components:
one or more interfaces (45) in order to receive different activation signals,
a memory (43) in order to store a predetermined table or a prescribed algorithm that allocates a prioritization level to every possible activation signal, and
an allocation unit (42) in order to allocate an associated prioritization level to a received activation signal.

6. Controller (3) according to either of Claims 4 and 5, wherein the controller (3) is integrated in an engine controller, a vehicle control computer or onboard electronics of a haptic accelerator pedal (11).

7. Computer program product that has computer-readable instructions that instruct a programmable controller (3) to perform a method according to one of Claims 1 to 3.

8. Computer-readable medium having a computer program product according to Claim 7 stored thereon.

## Revendications

1. Procédé pour commander une pédale d'accélérateur haptique (11) dans un véhicule automobile (1), dans lequel la pédale d'accélérateur haptique (11) est conçue pour générer, au moyen d'un actionneur (13), en exerçant une force antagoniste s'opposant à un dispositif d'actionnement (7), des signaux pouvant être perçus haptiquement sur un levier de pédale (5),
**caractérisé en ce que** la pédale d'accélérateur haptique (11) est conçue pour générer une pluralité de signaux différents pouvant être perçus haptiquement, dans lequel la génération d'un signal pouvant être perçu haptiquement peut être déclenchée par réception d'un signal d'activation correspondant par un dispositif de véhicule (37, 39),
dans lequel le procédé comprend les étapes consistant à :
recevoir un signal de pré-activation qui indique qu'un signal pouvant être perçu haptiquement devra probablement être généré dans le futur, et
associer un degré de priorisation correspondant au signal de pré-activation reçu ;
recevoir un signal d'activation qui indique qu'un signal pouvant être perçu haptiquement doit être généré à l'instant présent ;
associer au signal d'activation reçu un degré de priorisation correspondant ;
commander l'actionneur (13) afin de générer le signal pouvant être perçu haptiquement en tenant compte du degré de priorisation associé,
dans lequel l'actionneur (13) est uniquement commandé pour générer le signal pouvant être perçu haptiquement lorsque le degré de priorisation correspondant au signal d'activation reçu est supérieur à un degré de priorisation d'un signal de pré-activation reçu précédemment ou simultanément ou lorsqu'au moins un intervalle de temps de pré-activation prédéterminé s'est écoulé depuis la réception du signal de pré-activation.

2. Procédé selon la revendication 1, dans lequel l'actionneur (13) est uniquement commandé pour générer le signal pouvant être perçu haptiquement lorsque le degré de priorisation correspondant au signal d'activation reçu est supérieur à un degré de priorisation d'un autre signal d'activation reçu précédemment ou simultanément ou lorsqu'au moins un intervalle de temps de signal prédéterminé s'est écoulé depuis la réception d'un signal d'activation précédent.

3. Procédé selon l'une quelconque des revendications 1 ou 2, dans lequel le degré de priorisation correspondant au signal d'activation reçu est associé sur la base d'une table prédéterminée et/ou d'un algorithme au moyen de laquelle ou duquel un degré de priorisation est associé à chaque signal d'activation possible.

4. Appareil de commande (3) destiné à commander une pédale d'accélérateur haptique (11) dans un véhicule automobile (1), dans lequel l'appareil de commande (3) est conçu pour mettre en oeuvre un procédé selon l'une quelconque des revendications 1 à 3.

5. Appareil de commande (3) selon la revendication 4, dans lequel l'appareil de commande (3) comporte un dispositif de priorisation (41) qui comprend les composants suivants :
une ou plusieurs interfaces (45) destinées à recevoir différents signaux d'activation,
une mémoire (43) destinée à stocker des tables prédéterminées ou un algorithme prédéterminé au moyen desquelles ou duquel un degré de priorisation est associé à chaque signal d'activation possible, et
une unité d'association (42) destinée à associer un degré de priorisation correspondant à un signal d'activation reçu.

6. Appareil de commande (3) selon l'une quelconque des revendications 4 et 5, dans lequel l'appareil de commande (3) est intégré à un appareil de commande de moteur, à un calculateur maître de véhicule ou à une électronique embarquée d'une pédale d'accélérateur haptique (11).

7. Produit de programme informatique qui comporte des instructions exécutables par ordinateur ordonnant à un appareil de commande programmable (3) de mettre en oeuvre un procédé selon l'une quelconque des revendications 1 à 3.

8. Support lisible par ordinateur sur lequel est stocké un produit de programme informatique selon la revendication 7.
